# DEMANDE DE BREVET EUROPEEN

(11) **EP 4 390 739 A1**
(43) Date de publication de la demande: **26.06.2024**
(21) Numéro de dépôt: 23215977.2
(22) Date de dépôt: 12.12.2023
(51) Int. Cl.: G06F 21/57, G06F 21/74

(54) **PROTECTION D'UN DISPOSITIF ÉLECTRONIQUE**

(30) Priorité: 22.12.2022 FR 2214230
(71) Demandeur: STMicroelectronics (Rousset) SAS, 13790 Rousset (FR); PROTON WORLD INTERNATIONAL N.V., 1831 Diegem (BE)
(72) Inventeur: VAN NIEUWENHUYZE, Olivier, 1970 WEZEMBEEK-OPPEM (BE); CHARLES, Alexandre, 13390 AURIOL (FR)
(74) Mandataire: Thibon, Laurent

(57) **Abrégé**

La présente description concerne un dispositif électronique comprenant :
- un processeur exécutant un premier système d'exploitation de haut niveau (301) et une première application (302A, 302B) ;
- un élément sécurisé exécutant un premier système d'exploitation de bas niveau (355) configuré pour exécuter la vérification de la fiabilité du premier système d'exploitation (301), et un deuxième système d'exploitation de bas niveau (354) configuré pour exécuter une deuxième application et une communication sans fil avec ladite première application,
dans lequel à chaque démarrage du dispositif électronique, le premier système d'exploitation de bas niveau (355) effectue une vérification de la fiabilité du premier système d'exploitation de haut niveau (301), et
quand ladite première application envoie une requête à ladite deuxième application, ledit deuxième système d'exploitation de bas niveau (354) demande ledit résultat au premier système d'exploitation de bas niveau (355) et le rend accessible de la deuxième application.

## Description

### Domaine technique

La présente description concerne de façon générale les dispositifs électroniques, et de façon plus particulière les dispositifs électroniques adaptés à traiter des données secrètes. Plus particulièrement, la présente description concerne des dispositifs électroniques adaptés à mettre en oeuvre une communication sans fil, comme une communication en champ proche (NFC, Near Field Communication) ou une communication ultra large bande (UWB, Ultra Wideband), et dans laquelle au moins une partie des données échangées sont des données secrètes et/ou une partie des données échangées sont des données sensibles permettant, par exemple, un procédé d'identification ou d'authentification d'un utilisateur, ou permettant, par exemple, la localisation d'un utilisateur.

### Technique antérieure

Les dispositifs électroniques complexes, tels que les téléphones portables, les tablettes électroniques, les ordinateurs, etc, intègrent, au fil du temps, de plus en plus de fonctionnalités et permettent la mise en place de services numériques et/ou digitaux afin de s'intégrer au mieux à la vie quotidienne. A titre d'exemple, certains téléphones portables, et plus particulièrement des téléphones intelligents (smartphones), intègrent des services digitaux tels qu'un service de paiement bancaire, ou un service d'utilisation de titres de transport en commun, de billets de spectacle, ou encore un service de clé dématérialisée, dans lesquels une authentification de l'utilisateur auprès d'un système à distance (bancaire, administration publique, etc.) est susceptible d'être mise en oeuvre. Pour mettre en oeuvre ces fonctionnalités, ces appareils peuvent intégrer des composants électroniques spécifiques à ces fonctionnalités, comme par exemple des composants sécurisés qui permettent de conserver/stocker des informations d'identification, de référence et d'authentification, généralement désignées par "credentials", et des ressources (assets) du fournisseur du service digital, des capteurs de mouvement, un module de communication sans fil, comme un module de communication en champ proche (NFC, Near Field Communication) ou un module de communication ultra large bande (UWB, Ultra Wideband), etc.

Une difficulté découlant de l'ajout de nouvelles fonctionnalités, est que des données secrètes et/ou des données sensibles sont échangées entre différents modules et/ou couches logicielles d'un même dispositif électronique sans être protégées.

### Résumé de l'invention

Il existe un besoin pour des dispositifs électroniques traitant des données sensibles de façon fiable.

Il existe un besoin pour des dispositifs électroniques traitant des données sensibles reçues pendant une communication sans fil de façon plus fiable.

Il existe un besoin pour des communications sans fil plus fiables.

Un mode de réalisation pallie tout ou partie des inconvénients des dispositifs électroniques connus traitant des données sensibles.

Selon un premier aspect, un mode de réalisation prévoit un dispositif électronique comprenant :
- un processeur adapté à mettre en oeuvre au moins un premier système d'exploitation de haut niveau et au moins une première application ;
- un élément sécurisé adapté à mettre en oeuvre un premier système d'exploitation de bas niveau configuré pour mettre en oeuvre la vérification de la fiabilité ou l'authenticité du premier système d'exploitation, et un deuxième système d'exploitation de bas niveau configuré pour mettre en oeuvre au moins une deuxième application et pour mettre en oeuvre au moins une communication sans fil ou pour communiquer avec ladite au moins une première application,
   dans lequel à chaque démarrage du dispositif électronique, le premier système d'exploitation de bas niveau effectue une vérification de la fiabilité ou de l'authenticité du premier système d'exploitation de haut niveau, et
   quand ladite au moins une première application envoie une requête à ladite au moins une deuxième application, ledit deuxième système d'exploitation de bas niveau demande ledit résultat au premier système d'exploitation de bas niveau et le rend accessible de la deuxième application.

Un autre mode de réalisation prévoit un procédé de protection d'un dispositif électronique comprenant :
- un processeur adapté à mettre en oeuvre au moins un premier système d'exploitation de haut niveau et au moins une première application ;
- un élément sécurisé adapté à mettre en oeuvre un premier système d'exploitation de bas niveau configuré pour mettre en oeuvre la vérification de la fiabilité ou l'authenticité du premier système d'exploitation, et un deuxième système d'exploitation de bas niveau configuré pour mettre en oeuvre au moins une deuxième application et pour mettre en oeuvre au moins une communication sans fil ou pour communiquer avec ladite au moins une première application,
   dans lequel à chaque démarrage du dispositif électronique, le premier système d'exploitation de bas niveau effectue une vérification de la fiabilité ou d'authenticité du premier système d'exploitation de haut niveau, et
   quand ladite au moins une première application envoie une requête à ladite au moins une deuxième application, ledit deuxième système d'exploitation de bas niveau demande ledit résultat au premier système d'exploitation de bas niveau et le rend accessible de la deuxième application.

Selon un mode de réalisation, lorsque ledit résultat indique que le premier système d'exploitation de haut niveau est fiable ou authentique alors ladite au moins une deuxième application accepte la requête de ladite au moins une première application.

Selon un mode de réalisation, lorsque ledit résultat indique que le premier système d'exploitation n'est pas fiable ou authentique alors ladite au moins une deuxième application peut refuser, accepter partiellement ou accepter entièrement la requête de ladite au moins une première application.

Selon un mode de réalisation, lorsque ladite au moins une deuxième application refuse, accepte partiellement ou accepte entièrement la requête de ladite au moins une première application, ladite au moins une deuxième application prend en compte une liste de règles d'autorisations d'accès de ladite au moins une première application.

Selon un mode de réalisation, quand le premier système d'exploitation de bas niveau effectue la vérification de la fiabilité du premier système d'exploitation, le premier système d'exploitation de bas niveau stocke ledit résultat.

Selon un mode de réalisation, quand le deuxième système d'exploitation de bas niveau rend accessible à la deuxième application ledit résultat, le deuxième système d'exploitation de bas niveau envoie ledit résultat à ladite au moins une deuxième application.

Selon un mode de réalisation, quand le deuxième système d'exploitation de bas niveau rend accessible à la deuxième application ledit résultat, le deuxième système d'exploitation de bas niveau met à la disposition, de ladite au moins une deuxième application, ledit résultat par l'intermédiaire d'une première interface de programmation d'application.

Selon un mode de réalisation, le premier système d'exploitation de haut niveau est le programme connu sous la dénomination Trust Platform Module.

Selon un mode de réalisation, le deuxième système d'exploitation de bas niveau est le programme connu sous la dénomination Global Platform et/ou le programme connu sous la dénomination Java Card Virtual Machine.

Selon un mode de réalisation, lesdits premier et deuxième systèmes d'exploitation de bas niveau sont adaptés à communiquer par l'intermédiaire d'un canal de communication dédié.

Selon un mode de réalisation, l'élément sécurisé comprend une première puce électronique mettant en oeuvre ledit premier système d'exploitation de bas niveau, et une deuxième puce électronique, différente de la première puce, mettant en oeuvre ledit deuxième système d'exploitation de bas niveau.

Selon un mode de réalisation, la première puce est considérée comme un premier élément sécurisé, et la deuxième puce est considérée comme un deuxième élément sécurisé.

Selon un mode de réalisation, l'élément sécurisé est adapté à mettre en oeuvre au moins une deuxième interface de programmation d'application configurée pour vérifier si une commande reçue par ladite au moins une deuxième application a été envoyée de manière fiable.

Selon un mode de réalisation, dans lequel ladite deuxième interface de programmation d'application est configurée pour utiliser plusieurs moyens de vérification.

Selon un mode de réalisation, ladite deuxième interface de programmation d'application est configurée pour vérifier si l'expéditeur de ladite commande est fiable.

Selon un mode de réalisation, l'interface de programmation d'application est configurée pour vérifier si ledit système d'exploitation de haut niveau est authentique.

Selon un deuxième aspect, un mode de réalisation prévoit un dispositif électronique comprenant un élément sécurisé adapté à mettre en oeuvre au moins une première application, et une interface de programmation d'application configurée pour vérifier si une commande reçue par ladite au moins une première application a été envoyée de manière fiable.

Un autre mode de réalisation prévoit un procédé de protection d'un dispositif électronique comprenant un élément sécurisé adapté à mettre en oeuvre au moins une première application, et une interface de programmation d'application configurée pour vérifier si une commande reçue par ladite au moins une première application a été envoyée de manière fiable.

Selon un mode de réalisation, l'interface de programmation d'application est configurée pour utiliser plusieurs moyens de vérification.

Selon un mode de réalisation, une fois que ladite interface de programmation d'application a effectué la vérification, ladite interface de programmation d'application transmet ladite commande à ladite au moins une première application, et envoie le résultat de cette vérification à ladite première application.

Selon un mode de réalisation, l'interface de programmation d'application est configurée pour vérifier si l'expéditeur de ladite commande est fiable.

Selon un mode de réalisation, l'expéditeur est une deuxième application mise en oeuvre par un système d'exploitation de haut niveau d'un processeur compris dans ledit dispositif électronique.

Selon un mode de réalisation, l'interface de programmation d'application est configurée pour vérifier si ledit système d'exploitation de haut niveau est fiable ou authentique.

Selon un mode de réalisation, l'élément sécurisé met en oeuvre un premier système d'exploitation de bas niveau mettant en oeuvre ladite première application, et un deuxième système d'exploitation de bas niveau configurée pour vérifier si le système d'exploitation de haut niveau dudit processeur est fiable ou authentique,
l'interface de programmation d'application vérifie que ledit système d'exploitation de haut niveau est fiable en communiquant avec ledit premier système d'exploitation de bas niveau de l'élément sécurisé.

Selon un mode de réalisation, l'expéditeur est un système électronique indépendant du dispositif électronique, ledit système électronique étant adapté à être couplé avec ledit dispositif électronique.

Selon un mode de réalisation, ledit système électronique est adapté à être couplé avec ledit dispositif électronique en utilisant une fonction de couplage.

Selon un mode de réalisation, l'interface de programmation d'application est, en outre, configurée pour vérifier que le canal de communication utilisé pour transmettre la commande est un canal fiable.

Selon un mode de réalisation, l'interface de programmation d'application est, en outre, configurée pour valider l'authenticité de la vérification de ladite commande reçue par ladite au moins une première application.

Selon un mode de réalisation, ladite vérification est effectuée en mettant en oeuvre des moyens de vérification paramétrables par l'interface de programmation d'application en fonction de la fonction de couplage.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un exemple de dispositif électronique auquel peut être appliqué les modes de réalisation des figures 2 à 5 ;
la figure 2 représente, très schématiquement et sous forme de blocs, une architecture logicielle d'un dispositif électronique ;
la figure 3 représente, très schématiquement et sous forme de blocs, un premier mode de réalisation d'un dispositif électronique traitant des données sensibles ;
la figure 4 représente un schéma bloc illustrant un mode de mise en oeuvre du mode de réalisation de la figure 3 ; et
la figure 5 représente, très schématiquement et sous forme de blocs, un deuxième mode de réalisation d'un dispositif électronique traitant des données sensibles.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement des différents types de communication sans fil pouvant être mis en oeuvre par les modes de réalisation n'est pas détaillée.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

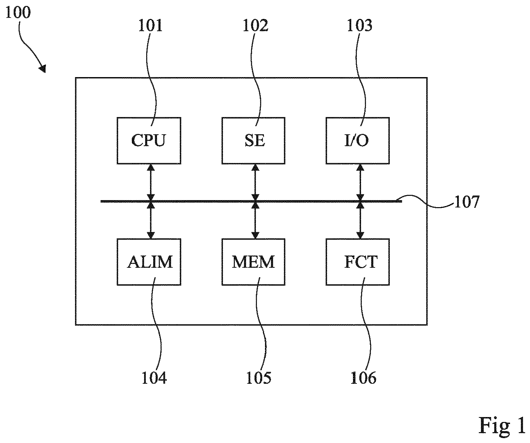

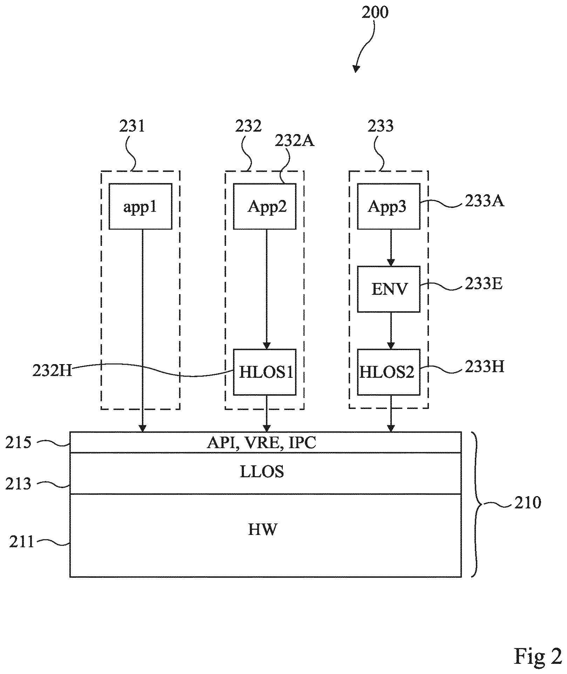

La figure 1 représente, très schématiquement et sous forme de blocs, un exemple d'un dispositif électrique 100 auquel peuvent s'appliquer les modes de réalisation décrits en relation avec les figures 2 à 5.

Le dispositif 100 est un dispositif électronique adapté à traiter des données, et qui est particulièrement adapté à traiter des données sensibles. Dans la suite de la description on appelle "sensibles" des données comprenant des informations secrètes ou potentiellement secrètes, ou des informations considérées comme privées pour une personne physique comme un utilisateur. Autrement dit, des données sensibles sont des données qui ne sont pas accessibles à tous et qui ne peuvent être partagées avec n'importe quel dispositif électronique.

Le dispositif 100 comprend un processeur 101 (CPU) permettant de traiter des données. Selon un exemple, le dispositif 100 peut comprendre plusieurs processeurs adaptés chacun à traiter différents types de données. Selon un exemple particulier, le dispositif 100 peut comprendre un processeur principal et un ou plusieurs processeurs secondaires.

Le dispositif 100 comprend, en outre, un ou plusieurs éléments sécurisés 102 (SE) permettant la gestion de données sensibles, comme le stockage ou l'utilisation de ces données, ou permettant, par exemple, de mettre en oeuvre des applications sécurisées. Un élément sécurisé 102 peut comprendre son ou ses propres processeurs dédiés, ainsi que sa ou ses propres mémoires. Un élément sécurisé 102, et son système d'exploitation, est considéré, dans la suite de la description, comme fiable et inviolable. De plus, dans la suite de la description, l'expression "élément sécurisé" désigne par la suite indifféremment un élément sécurisé embarqué ou un élément sécurisé intégré.

Le dispositif 100 comprend, en outre, un ou plusieurs circuits d'entrée/sortie 103 (I/0) permettant au dispositif 100 de transmettre et/ou recevoir des données et/ou de l'énergie avec un ou plusieurs dispositifs électroniques externes. En particulier, les circuits permettant de gérer des communications avec d'autres dispositifs, comme des circuits, ou modules, permettant de gérer des communications filaires, comme des communications utilisant le protocole USB, et/ou des communications sans fil, comme des communications par Wifi, des communications Bluetooth, et/ou des communications en champ proche (NFC). Le dispositif comprend, plus précisément, au moins un module NFC, c'est-à-dire un module adapté à la communication en champ proche (Near Field Communication, NFC), et/ou un module UWB, c'est-à-dire un module adapté à la communication par ultra large bande (Ultra Wideband, UWB).

Le dispositif 100 comprend, en outre, un ou plusieurs circuits 104 (ALIM) prenant en charge l'alimentation en énergie du dispositif 100. Selon un exemple, les circuits 104 peuvent comprendre une ou plusieurs batteries, des circuits de conversion d'énergie, des circuits de charge, etc.

Le dispositif 100 comprend, en outre, une ou plusieurs mémoires 105 (MEM) dans lesquelles sont stockées des données, par exemple des données binaires. Selon un exemple, le dispositif 100 comprend plusieurs types de mémoire, comme une mémoire morte, une mémoire volatile, et/ou une mémoire non volatile.

Le dispositif 100 comprend, en outre, un ou plusieurs circuits 106 (FCT) mettant en oeuvre une ou plusieurs fonctionnalités du dispositif 100. Selon un exemple, les circuits 106 peuvent comprendre des circuits de traitement spécifiques de données, comme des circuits de chiffrement, ou des circuits permettant d'effectuer des mesures, comme des capteurs.

Le dispositif 100 comprend, en outre, un ou plusieurs bus de communication 107 permettant à tous les circuits du dispositif 100 de communiquer. En figure 1, un seul bus 105 reliant le processeur 101, la ou les mémoires 102, et les circuits 103 à 106 est représenté, mais en pratique, le dispositif 100 peut comprendre plusieurs bus de communication reliant ces différents éléments. En particulier, le dispositif 100 peut comprendre plusieurs bus de communication partagés par plus de deux circuits du dispositif, et/ou un ou plusieurs bus de communication ne reliant que deux circuits entre eux. Par ailleurs, un circuit du dispositif 100 peut être relié à plusieurs bus de communication.

La figure 2 représente, de façon schématique et sous forme de blocs, un mode de réalisation d'une architecture logicielle 200 d'un dispositif électronique du type de celui décrit en relation avec la figure 1.

L'architecture 200 comprend une plateforme primaire virtuelle 210 (VPP, Virtual Primary Plateform), ou plateforme primaire 210, permettant de mettre en oeuvre les différentes fonctionnalités du dispositif électronique. La plateforme primaire 210 est composée de trois niveaux :
- l'accès à des composants électroniques 211 (HW, Hardware) du dispositif électronique ;
- un ou plusieurs systèmes d'exploitation de bas niveau 213 (LLOS, Low Level Operating System) ; et
- une ou plusieurs interfaces logicielles 215 (API, ABI, VRE, IPC) .

Les composants 211 sont les ressources matérielles du dispositif électronique. Les composants 211 de l'élément sécurisé 110 sont, par exemple, les un ou plusieurs processeurs, par exemple le processeur 101 (figure 1), une ou plusieurs mémoires, par exemple les mémoires 105 (figure 1), un ou plusieurs dispositifs de communication, comme les circuits d'entrée sortie du type des circuits 103 (figure 1), comme un dispositif de communication en champ proche (NFC, Near Field Communication), un dispositif de communication à courte distance utilisant, par exemple, la norme Bluetooth, un dispositif adapté à la technologie d'ultra large bande, aussi connue sous la dénomination Ultra Wideband (UWB), ou encore des capteurs, comme des capteurs biométriques.

Les systèmes d'exploitation de bas niveau 213 sont des logiciels adaptés à mettre en oeuvre les composants 211 pour exécuter des commandes reçues de la part des applications mises en oeuvre par l'élément sécurisé. A titre d'exemple, les systèmes d'exploitation de bas niveau 213 comprennent tout ou partie des logiciels pilotes des composants 211.

Un système d'exploitation de bas niveau 213 est composé d'un code d'exécution (ou code exécutable) et de données d'exécution. Le code d'exécution contient des instructions permettant l'exécution des fonctions du programme. Par définition, les instructions sont invariables pour un programme donné, à l'exception d'une mise à jour du programme qui modifie alors les instructions. Les données d'exécution sont utilisées par le code d'exécution pour contextualiser l'exécution et réaliser la fonction souhaitée.

La plateforme primaire 210 communique avec des applications mises en oeuvre par l'élément sécurisé 110 par l'intermédiaires des interfaces logicielles 215 exécutées par la plateforme primaire. Ces interfaces 215 peuvent comprendre, entres autres :
- des interfaces de programmation d'application (API, Application Programming Interface) ;
- des registres (VRE, Virtual Register) ; et
- des mémoires tampon de mémorisation, ou mémoires tampon, ou encore des mémoires partagées permettant l'échange de données entre processus via des communications inter-processus (IPC - Inter Process Communication).

Les interfaces de programmation d'application sont des logiciels permettant à plusieurs applications, décrites en détail ci-après, de communiquer entre elles, ou de communiquer avec des un ou plusieurs systèmes d'exploitation de bas niveau. Selon un exemple, les logiciels d'interface permettent de convertir une commande envoyée par une application en une commande exécutable par les systèmes d'exploitation de bas niveau 213.

Les registres sont des espaces mémoire liés à une fonction matérielle du dispositif électronique et utilisés pour stocker temporairement des données, par exemple lorsqu'une commande est envoyée à la plateforme primaire 210 du dispositif électronique ou lors d'échanges entre processus exécutés par la plateforme primaire.

Les mémoires tampon (ou mémoires partagées) sont utilisées pour stocker des messages avant leur utilisation par la plateforme 210 ou par des applications du dispositif électronique. En pratique, les mémoires tampon sont des espaces mémoire alloués dans une mémoire de l'élément 110 ou 100', par exemple une mémoire volatile à laquelle l'élément 110 a accès, comme la mémoire 114.

A titre d'exemple, l'architecture logicielle 200 comprend au moins trois applications 231, 232, 233 adaptées à être mises en oeuvre par la plateforme primaire 210. Les applications 231, 232, 233 sont des logiciels ou des programmes informatiques utilisant les ressources de la plateforme primaire. Bien entendu, le dispositif électronique met en oeuvre un nombre d'applications dans la limite de ses capacités de calcul, et de ses capacités de stockage de données.

Comme les systèmes d'exploitation de bas niveau 213, chaque application 231, 232, 233 est composée d'un code d'exécution (ou code exécutable) et de données d'exécution. Le code d'exécution contient des instructions permettant l'exécution des fonctions de l'application. Par définition, les instructions sont invariables pour une application donnée, à l'exception d'une mise à jour du programme qui modifie alors les instructions. Les données d'exécution sont utilisées par le code d'exécution pour contextualiser l'exécution et réaliser la fonction souhaitée.

Les applications 231, 232, 233 peuvent chacune être mises en oeuvre par un processeur différent. Selon un exemple, certaines applications sont mises en oeuvre par le processeur principal du dispositif électronique, comme le processeur 101, et d'autres applications sont mises en oeuvre par le processeur de l'élément sécurisé, comme l'élément sécurisé 102.

Les applications 231, 232, 233 peuvent être adaptées à mettre en oeuvre toutes sortes de fonctionnalités. Elles mettent généralement en oeuvre des services digitaux d'un fournisseur de service, par exemple, un service de paiement de type EMV ou de ticket de transport. Ces applications peuvent être mises en combinaison avec une autre application se trouvant dans le processeur principal 101 (figure 1), ou dans un autre environnement sécurisé (Trusted Execution Environment). Le processeur et l'environnement sécurisé sont plus à même d'interagir avec l'utilisateur via une interface utilisateur sécurisée (Trusted User Interface). Les applications 231, 232, 233 sont, par exemple, adaptées à traiter des commandes provenant d'interfaces de communication, comme, par exemple, une transaction bancaire utilisant un dispositif de communication en champ proche. Ces applications peuvent être de différents types, par exemple, une application SIM (Subscriber Identity Module), une application de paiement, une application permettant la validation d'un ticket de transport en commun, etc.

Selon un exemple de type d'application, l'application 231 (App1) est adaptée à être mise en oeuvre directement par la plateforme primaire 210 (VPP). L'application 231 est, par exemple, une application permettant d'effectuer des paiements en communiquant avec un dispositif de communication en champ proche (NFC, Near Field Communication).

Selon un autre exemple de type d'application, l'application 232 est un ensemble d'instructions 232A (App2) adaptées à être exécutées en utilisant un système d'exploitation de haut niveau 232H (HLOS1). Un système d'exploitation de haut-niveau est un logiciel adapté à mettre en oeuvre différentes applications en leur proposant un ensemble de fonctions logicielles communes. Le système d'exploitation 232H est la seule partie de l'application 232 à communiquer avec la plateforme primaire 210. A titre de variante, on peut également considérer que le système d'exploitation de haut niveau, ainsi que toutes les applications qui lui sont attachées, sont une seule application adaptée à être mise en oeuvre par la plateforme primaire 210. De plus, un système d'exploitation de haut niveau peut être un système d'exploitation rattaché à un processeur du dispositif électronique. Selon un exemple, dans la suite de la description, on parle de système d'exploitation de haut niveau du processeur principal 101 du dispositif électronique, il s'agit alors du système d'exploitation de haut niveau mettant en oeuvre les applications exécutées par le processeur principal 101. On parle aussi du système d'exploitation de haut niveau de l'élément sécurisé 102, il s'agit alors du système d'exploitation de haut niveau mettant en oeuvre les applications exécutées par l'élément sécurisé 102.

Selon un autre exemple de type d'application, une autre application 233 est un ensemble d'instructions 233A (App3) utilisant un environnement d'exécution 233E (ENV) qui utilise lui-même un système d'exploitation de haut niveau 233H (HLOS2). L'environnement d'exécution est, par exemple, de type Java ou JavaCard. Le système d'exploitation 233H et l'environnement d'exécution 233E sont les seules parties de l'application 233 à communiquer avec la plateforme primaire 210. A titre de variante, on peut également considérer que le système d'exploitation de haut niveau, ainsi que toutes les applications qui lui sont attachées, sont une application adaptée à être mise en oeuvre par la plateforme primaire 210.

Un exemple de mise en oeuvre de l'application 231, 232, ou 233 est la suivante. Lorsqu'une application 231, 232, ou 233 souhaite utiliser une ressource matérielle de l'élément sécurisé, c'est-à-dire un ou plusieurs composants 211 de la plateforme primaire 210, cela signifie que les opérations courantes exécutées sur les données fixes sont considérées comme terminées. L'application peut alors exécuter différentes commandes comme, par exemple, forcer une écriture vers une mémoire non volatile. Pour cela, l'application envoie une commande et/ou des données à la plateforme primaire 210 par l'intermédiaire des interfaces 215. La commande est prise en charge par une ou plusieurs interfaces de programmation d'application avant d'être envoyée aux systèmes d'exploitation de bas niveau 213, c'est-à-dire que la commande est divisée en plusieurs opérations. Les données sont, quant à elles, stockées dans des registres ou transmises via des communications entre processus (IPC). Les systèmes d'exploitation de bas niveau 213 répondent aux demandes des interfaces binaire-programme en appliquant les opérations demandées par les interfaces binaire-programme aux données stockées dans les registres. Les systèmes d'exploitation de bas niveau 213 pilotent ensuite les composants 211 pour exécuter ce que demande l'application.

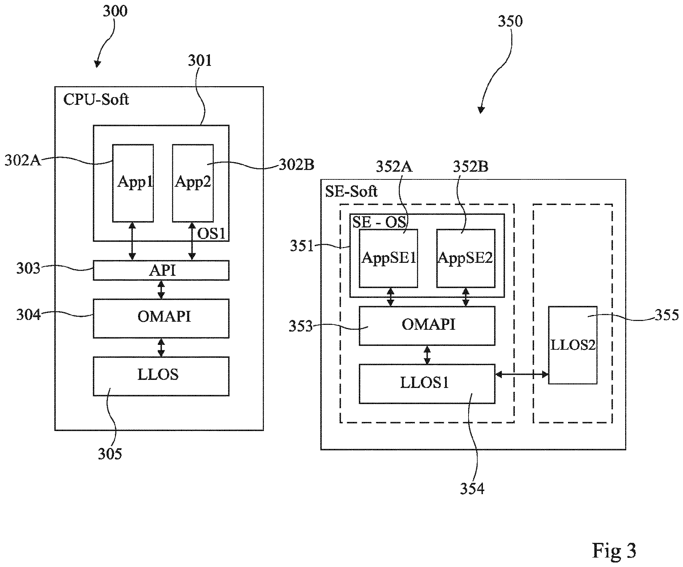

La figure 3 représente, très schématiquement et sous forme de blocs, un premier exemple plus précis d'architecture logicielle utilisée dans un dispositif électronique, du type de celui décrit en relation avec la figure 1, constituant un mode de réalisation.

Comme décrit précédemment, le mode de réalisation du dispositif électronique comprend un processeur principal, ou processeur d'applications, et au moins un élément sécurisé. Le processeur principal et l'élément sécurisé sont tous deux adaptés à mettre en oeuvre une ou plusieurs applications.

En particulier, le processeur principal met en oeuvre l'architecture logicielle 300 (CPU_Soft) suivante. Le processeur principal met en oeuvre un système d'exploitation de haut niveau 301 (OS1) lui permettant de mettre en oeuvre une ou plusieurs applications. Dans le cas illustré en relation avec la figure 3, le processeur principal est adapté à mettre en oeuvre, par l'intermédiaire du système d'exploitation de haut niveau 301, deux applications 302A (App1) et 302B (App2). Le processeur principal est, en outre, adapté à mettre en oeuvre certains logiciels compris dans la plateforme primaire, à savoir au moins une ou plusieurs interfaces de programmation d'application 303 (API) (Application Programming Interface), au moins une couche de filtrage 304 (OMAPI), et au moins un système d'exploitation de bas niveau 305 (LLOS). Selon un exemple, l'architecture logicielle 300 correspond à l'architecture logicielle d'un téléphone portable intelligent désignée par l'appellation commerciale Android.

Les interfaces de programmation d'application 303 sont des interfaces adaptées à recevoir des commandes et/ou des données de la part d'application et à les convertir avant leur transmission à d'autres applications ou d'autres couches logicielles de l'architecture 301. Dit autrement, une interface de programmation d'application est une couche logicielle permettant, entre autres, de prendre en charge les communications extérieures d'une ou plusieurs applications.

La couche de filtrage 304 est un logiciel faisant partie des interfaces logicielles 215 et est adaptée à autoriser, limiter ou interdire, une application, par exemple les applications 302A et 302B, à utiliser tout ou partie d'un ou plusieurs circuits ou composants du dispositif électronique. Dit autrement, la couche de filtrage 304 reçoit les commandes envoyées par les interfaces de programmation d'application 303 et décide si elle les transmet ou non en fonction de l'application qui a formulé la commande initiale. La couche de filtrage 304 peut se baser sur différents critères pour autoriser ou non l'accès aux circuits et composants du dispositif à une application. Selon un exemple, la couche de filtrage 304 peut autoriser l'accès à un ou à une partie d'un circuit ou composant du dispositif électronique à une première application, et refuser cet accès à une deuxième application. Selon un exemple, la couche de filtrage 304 est une couche OMAPI définie par la norme désignée couramment par l'appellation GlobalPlatform.

Selon un premier exemple, si l'application est une application système, c'est-à-dire une application produite par le fabricant du dispositif électronique, ou par le fabricant ou concepteur des logiciels 303, l'application peut avoir une autorisation permanente d'accès à tous les circuits ou composants, ou seulement à des circuits et composants choisis par le fabricant. De plus, à l'inverse, une application système peut avoir un accès limité, permanent ou non, à tout ou partie d'un ou plusieurs circuits ou composants du dispositif électronique. Ainsi, certaines parties de circuits ou composants, ou certains circuits ou composants du dispositif électronique peuvent n'être accessibles qu'à des applications système, et une application ne remplissant pas ce critère recevra systématiquement un refus à chaque fois qu'elle essayera d'envoyer une commande à ces parties de circuit ou composants, ou circuits ou composants.

Selon un deuxième exemple, l'application peut être une application fiable ayant passé différents tests de fiabilité auprès du fabricant du dispositif électronique, ou auprès du fabricant ou concepteur des interfaces 303, qui l'a donc autorisé de façon permanente à avoir accès à tout ou partie des circuits ou composants du dispositif électronique. Une application fiable de ce type peut être assimilée à une application système, et donc en présenter les mêmes caractéristiques.

Selon un troisième exemple, l'application peut avoir la possibilité de s'authentifier, périodiquement, auprès d'un serveur externe au dispositif électronique pour obtenir une autorisation temporaire d'accès à tout ou partie des circuits et composants du dispositif électronique. Dans la suite de la description on dira qu'une application est autorisée à avoir accès à tel circuit ou à tel composant du dispositif électronique si la couche de filtrage 304 lui en autorise l'accès. Selon un exemple, l'autorisation temporaire d'accès aux circuits et composants du dispositif électronique peut être conservée par les interfaces 303, les interfaces 303 étant, par exemple, adapté à mettre en oeuvre l'authentification de l'application auprès du serveur externe.

Selon un quatrième exemple, un circuit ou composant du dispositif électronique, par exemple l'élément sécurisé 2012, peut être adapté à déterminer quelles applications ont l'autorisation de mettre une ou plusieurs de ses fonctions. Un circuit ou composant du dispositif électronique peut, par exemple, fournir, à la couche de filtrage 304, une liste indiquant quelle application est autorisée à mettre en oeuvre un ou plusieurs de ses fonctions. Selon une variante, ce circuit ou composant peut fournir des autorisations temporaires à tout ou partie d'une application, par exemple, en autorisant un certain nombre d'utilisations d'une ou plusieurs de ses fonctions. C'est la couche de filtrage 304 qui applique ces autorisations au moment où une application envoie des ordres d'utilisation d'une ou plusieurs fonctions d'un ou plusieurs circuits ou composants du dispositif électronique. Selon un mode de réalisation préféré, c'est l'élément sécurisé du dispositif électronique qui comprend une liste de règles, par exemple stockée dans une mémoire, indiquant les autorisations des différents applications mises en oeuvre par le dispositif électronique.

Selon un cinquième exemple, l'élément sécurisé du dispositif électronique fournit une liste de règles d'accès aux applications 302A et 302B à la couche de filtrage 304. Les règles sont chargées dans la couche de filtrage 304 et appliquées à chaque sollicitation des applications 302A et 302B. Selon un exemple, la liste de règles peut être mise à jour directement dans l'élément sécurisé, par exemple, à distance. Après une mise à jour de la liste de règles, l'élément sécurisé fournit la liste de règles modifiées à la couche de filtrage 304. Cette opération peut être réalisée pendant le redémarrage du dispositif électronique, ou alors pendant le fonctionnement du dispositif électronique.

Par ailleurs, l'élément sécurisé met en oeuvre l'architecture logicielle 350 (SE_Soft) suivante. L'élément sécurisé met en oeuvre un système d'exploitation de haut niveau 351 (SE_OS), considéré comme fiable et sure, et permettant la mise en oeuvre d'une ou plusieurs applications. Dans le cas illustré en relation avec la figure 3, l'élément sécurisé est adapté à mettre en oeuvre, par l'intermédiaire du système d'exploitation de haut niveau 351, deux applications 352A (AppSE1) et 352B (AppSE2).

De plus, l'élément sécurisé stocke aussi les règles 353 des interfaces 303 du processeur principal. Selon un mode de réalisation, c'est l'élément sécurisé qui envoie les règles 353 aux interfaces 303, il peut aussi, par exemple, réaliser des mises à jour de ces règles 353.

De plus, l'élément sécurisé peut mettre en oeuvre plusieurs systèmes d'exploitation de bas niveau indépendants entre eux. En figure 3, l'élément sécurisé met en oeuvre deux systèmes d'exploitation de bas niveau 354 et 355 totalement indépendants entre eux.

Selon un mode de réalisation, le système d'exploitation de bas niveau 354 est un système d'exploitation présentant les caractéristiques suivantes. Le système d'exploitation de bas niveau 354 permet la mise en oeuvre d'une communication utilisant un système de communication sans fil comme un système de communication en champ proche (NFC, Near Field Communication), ou un système de communication ultra large bande (UWB, Ultra Wide Band). Le système d'exploitation 354 est configuré pour mettre en oeuvre, plus particulièrement, une transaction en utilisant ce système de communication sans fil, c'est-à-dire une communication dans lequel un échange de données sensibles, comme des données d'identification, des données bancaires, ou autres, peut avoir lieu. De plus, les applications 352A et 352B sont toutes les deux configurées pour échanger des commandes avec le système d'exploitation de bas niveau 354, par exemple par l'intermédiaire des règles 353. Selon un exemple, le système d'exploitation de bas niveau est le programme connu sous la dénomination Global Platform (GP) et/ou le programme connu sous la dénomination Java Card Virtual Machine (JCVM).

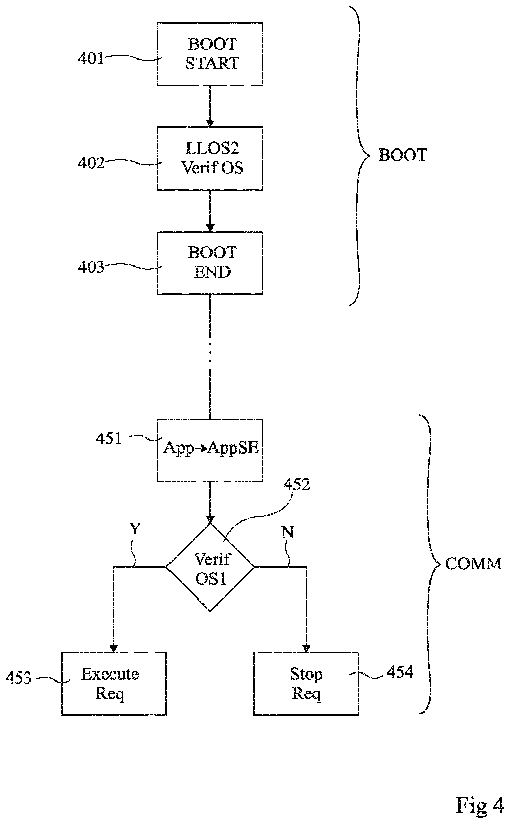

Selon un mode de réalisation, le système d'exploitation de bas niveau 355 est un système d'exploitation présentant les caractéristiques suivantes. Le système d'exploitation 355 est adapté à vérifier la fiabilité du système d'exploitation de haut niveau 301 du processeur principal, et/ou à vérifier l'authenticité du système d'exploitation de haut niveau 301 du processeur principal. Plus particulièrement, le système d'exploitation 355 est adapté à vérifier si le système d'exploitation de haut niveau 301 est toujours conforme à la version du système d'exploitation de haut niveau 301 produite par le concepteur du dispositif électronique. De plus, le système d'exploitation 355 est adapté à stocker le résultat de cette vérification. Le procédé de vérification et son utilisation est décrit plus en détail en relation avec la figure 4. Selon un exemple, le système d'exploitation de bas niveau est le programme connu sous la dénomination Trust Platform Module (TPM).

Selon un mode de réalisation, les systèmes d'exploitation de bas niveau 354 et 355 sont adaptés à échanger des données et des commandes entre eux, par exemple en utilisant un canal de communication dédié. Selon un exemple, ce canal de communication dédié peut être un bus de communication, une mémoire partagée, ou un registre commun.

Par ailleurs, selon un exemple, l'élément sécurisé peut être constitué de deux puces électroniques distinctes, une première puce mettant en oeuvre le système d'exploitation de haut niveau 351, les applications 352A et 352B, les règles 353 et le système d'exploitation de bas niveau 354, et une deuxième puce mettant en oeuvre le système d'exploitation de bas niveau 355. Ces deux puces différentes sont signifiées par des blocs en pointillés en figure 3. Selon un autre exemple, les deux puces peuvent être considérées comme deux éléments sécurisés distincts.

Selon un autre exemple, le système d'exploitation de haut niveau 351, les applications 352A et 352B, les règles 353 et le système d'exploitation de bas niveau 354, et le système d'exploitation de bas niveau 355 peuvent être mis en oeuvre par une unique puce électronique, cette puce étant adapté à adapter son fonctionnement en fonction du système d'exploitation de bas niveau 354 ou 355 mis en oeuvre.

La figure 4 est un schéma-bloc représentant un mode de réalisation d'un procédé de protection du dispositif dont l'architecture logicielle est décrite en relation avec la figure 3.

Le procédé de protection du dispositif électronique comprend deux phases. Une première phase BOOT se déroule pendant le démarrage du dispositif électronique, et une deuxième phase COMM se déroule au moment où une application mise en oeuvre par le processeur principal demande à communiquer avec une application mise en oeuvre par l'élément sécurisé.

Pendant la première phase BOOT, à une première étape 401 (BOOT START), le dispositif électronique démarre de façon matérielle et de façon logicielle.

A une étape 402 (LLOS2 Verif OS), suivant l'étape 401, le système d'exploitation de bas niveau 355, décrit en relation avec la figure 3, réalise une vérification de l'architecture logicielle 300, c'est-à-dire du système d'exploitation de haut niveau 301 et des couches logicielles 303 à 305, décrits en relation avec la figure 3, du processeur principal du dispositif électronique. Par cette vérification, le système d'exploitation de bas niveau 355 détermine si l'architecture logicielle 300 est fiable, ou authentique, c'est-à-dire permettant des échanges de données sensibles ou secrètes entre le système d'exploitation de haut niveau 301 et les applications 302A et 302B qu'il met en oeuvre. Selon un exemple, par cette vérification, le système d'exploitation de bas niveau 355 détermine si l'architecture logicielle 300 est authentique, c'est-à-dire fourni par le fabriquant de l'architecture 300 ou du dispositif la mettant en oeuvre. Pour ce faire, le système d'exploitation de bas niveau 355 peut, par exemple, vérifier tout ou partie du code de programmation de l'architecture logicielle 300. De plus, le système d'exploitation de bas niveau 355 peut déterminer qu'une ou plusieurs partie de l'architecture logicielle 300 est fiable, et qu'une ou plusieurs autres parties de l'architecture logicielle 300 sont non fiables. Une fois la vérification réalisée, le système d'exploitation de bas niveau 355 en stocke le résultat.

Selon une variante, si le processeur principal du dispositif électronique met en oeuvre plusieurs systèmes d'exploitation de haut niveau du type de l'architecture logicielle 300, alors, à l'étape 402, le système d'exploitation de bas niveau 355 réalise la vérification de tous les systèmes d'exploitation mis en oeuvre par le processeur principal. Selon une autre variante, le système d'exploitation de bas niveau ne pourrait réaliser la vérification que de certains systèmes d'exploitation de haut niveau de l'architecture logicielle, comme par exemple, les systèmes d'exploitation de haut niveau principaux, ou la vérification que de certaines couches logicielles de 'l'architecture logicielle 300.

A une étape 403 (BOOT END), suivant l'étape 402, le dispositif électronique a terminé son démarrage, et est prêt pour être utilisé.

Pendant la deuxième phase COMM, à une première étape 451 (App -> AppSE), une application mise en oeuvre par le système d'exploitation de haut niveau 301 du processeur principal, par exemple l'application 302A, demande à entrer en contact avec une application mise en oeuvre par le système d'exploitation de haut niveau 351 de l'élément sécurisé, par exemple l'application 352A. Plus particulièrement, l'application 302A envoie une requête à une interface de programmation d'application 303. Cette requête est vérifiée par l'interface de filtrage 304, et si l'interface de filtrage 304 valide la requête, alors le système d'exploitation de bas niveau 305 du processeur principal transfère la requête à l'élément sécurisé. Comme la requête est destinée à l'application 352A, c'est le système d'exploitation de bas niveau 354 qui reçoit la requête.

A une étape 452 (Verif OS1), le système d'exploitation de bas niveau 354 reçoit la requête initiée par l'application 302A, et ne transmet pas la requête à l'application 352A destinataire tant qu'il ne s'est pas assuré que le système d'exploitation de haut niveau 301 mettant en oeuvre l'application 302A est fiable. Pour cela, le système d'exploitation 354 interroge le système d'exploitation de bas niveau 355 sur la fiabilité de l'architecture logicielle 300. Le système d'exploitation de bas niveau 355 transmet le résultat de la vérification réalisée au cours de la première phase BOOT au système d'exploitation de bas niveau 354. Le système d'exploitation de bas niveau 354 peut ensuite transmettre la requête à l'application destinataire 352A, et rendre accessible à l'application 352A le résultat de la vérification. Selon un premier exemple, le système d'exploitation de bas niveau 354 peut envoyer le résultat de la vérification avec la requête à l'application 352A. Selon un deuxième exemple, le système d'exploitation de bas niveau 354 peut rendre l'information accessible via une interface de programmation d'application du même type que les interfaces 303, à l'application 352A.

L'application 352A ayant accès au résultat de la vérification, elle peut prendre en compte l'information. Si l'architecture logicielle 300 est considérée comme fiable (sortie Y de l'étape 452), l'étape suivante est une étape 453 (Execute Req), sinon (sortie N de l'étape 452), l'étape suivante est une étape 454 (Stop Req).

A l'étape 453, l'architecture logicielle 300 est considérée comme fiable, l'application 352A peut traiter et, le cas échéant, répondre à la requête de l'application 302A, par exemple en utilisant des données sensibles ou secrètes.

A l'étape 454, l'architecture logicielle 300 est considérée comme non fiable, au moins en partie, l'application 352A prend donc en compte cette information. Selon un premier exemple, l'application 352A peut décider de ne pas traiter et, le cas échéant, de ne pas répondre à la requête de l'application 302A, par exemple en ne retournant aucune donnée ou en retournant des données d'erreur ou des données aléatoires. Selon un deuxième exemple, l'application 352A peut décider de traiter en partie et, le cas échéant, de ne répondre qu'en partie à la requête de l'application 302A, par exemple en ne divulguant aucune donnée sensible ou secrète. Selon un troisième exemple, l'application 352A peut décider de tout de même traiter et, le cas échéant, de répondre à la requête de l'application 302A, par exemple si la requête reçue ne concerne aucune donnée sensible ou secrète, ou par exemple si la requête reçue ne met pas en danger l'application 352A, comme par exemple une attaque de type déni de service (Denial of Services).

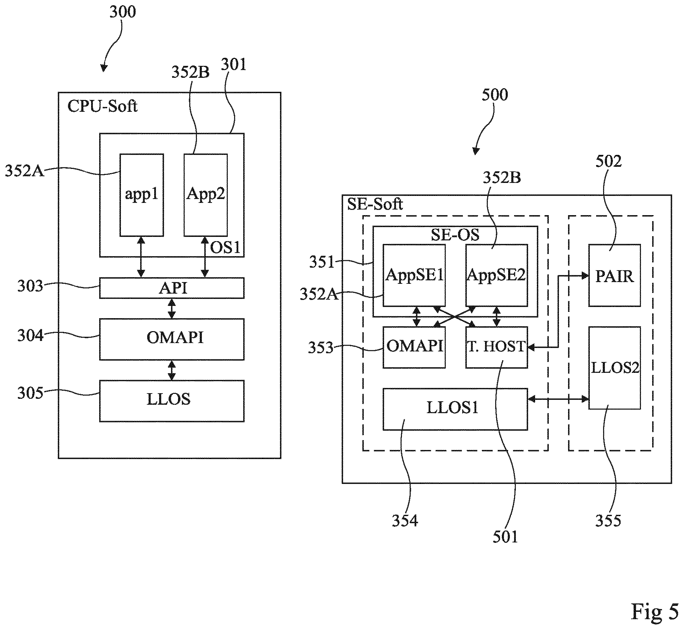

La figure 5 représente, très schématiquement et sous forme de blocs, un deuxième exemple plus précis d'architecture logicielle utilisée dans un dispositif électronique, du type de celui décrit en relation avec la figure 1, constituant un mode de réalisation.

Ce deuxième exemple peut comprendre des éléments communs avec le premier exemple décrit en relation avec la figure 3. Ces éléments communs ne sont pas décrits de nouveau en détail ici, et seules les différences entre ces deux exemples sont mis en exergue.

Dans ce deuxième exemple, le processeur principal peut utiliser la même architecture logicielle 300 que dans le premier exemple, ou une architecture du même type. L'élément sécurisé utilise une architecture logicielle 500 comprenant des éléments communs avec l'architecture 350 décrite en relation avec la figure 3.

Comme l'architecture logicielle 350, l'architecture logicielle 500 comprend le système d'exploitation de haut niveau 351 (SE_OS), considéré comme fiable et sure, et permettant la mise en oeuvre d'une ou plusieurs applications, dans le cas illustré en relation avec la figure 3, deux applications 352A (AppSE1) et 352B (AppSE2). De plus, l'architecture logicielle 500 peut comprendre les règles 353 des interfaces 303 du processeur principal. Selon un exemple, l'architecture logicielle 500 peut comprendre le système d'exploitation de bas niveau 354 permettant de mettre en oeuvre les applications 352A et 352B. Selon un exemple, et de manière optionnelle, l'architecture logicielle 500 peut aussi comprendre le système d'exploitation de bas niveau 355 décrit en relation avec la figure 3.

Selon un mode de réalisation, l'architecture logicielle 500 comprend, en outre, une interface de programmation d'application 501 (T. HOST) configurée pour vérifier si les commandes reçues par les applications mises en oeuvre par l'élément sécurisé, c'est-à-dire les applications 352A et 352B dans le cas de la figure 5, ont été envoyées de manière fiable. Pour cela, l'interface de programmation d'application 501 peut être configurée pour mettre en oeuvre plusieurs moyens de vérification différents, ou règles de vérifications différentes, dont certains sont détaillés ci-après. Une fois la vérification réalisée, le résultat de cette vérification est transmise à l'application destinataire de la commande, en parallèle de la commande elle-même. L'application analyse ce résultat et en déduit si elle peut traiter, ou non, en partie ou en totalité, ladite commande. De plus, l'interface de programmation d'application 501 est, en outre, configurée pour valider l'authenticité de la ou des vérifications qu'elle effectue.

Un exemple de moyen de vérification peut être de vérifier que l'expéditeur de la commande est fiable.

L'expéditeur de la commande peut être, selon un premier exemple, une des applications mises en oeuvre par le processeur principal du dispositif électronique. Dans ce cas, l'interface de programmation d'application 501 peut vérifier la fiabilité de l'application en question. Si l'architecture comprend le système d'exploitation de bas niveau 355, l'interface de programmation d'application 501 peut communiquer avec le système d'exploitation de bas niveau 355 pour utiliser le résultat de la vérification du système d'exploitation de haut niveau 301 décrit en relation avec les figures 3 et 4.

L'expéditeur de la commande peut être, selon un deuxième exemple, un système électronique externe au dispositif électronique, et mettant en oeuvre une communication avec ledit dispositif électronique. Selon un exemple, la communication peut être une communication filaire ou une communication sans fil comme une communication en champ proche (NFC) ou une communication à ultra large bande (UWB). Selon un exemple, le système électronique peut être un système électronique avec lequel le dispositif électronique est adapté à être couplé, par exemple en utilisant une fonction de couplage 502 (PAIR). La fonction de couplage 502 peut être mise en oeuvre par la même puce que le système d'exploitation de bas niveau 355, par le système d'exploitation de bas niveau 354, ou encore être mise en oeuvre par une interface de programmation d'application mise en oeuvre par la même puce que le système d'exploitation de bas niveau 354.

Un autre exemple de moyen de vérification peut être de vérifier que le canal de communication utilisée pour transmettre les commandes.

D'autres moyens de vérification sont à la portée de la personne du métier.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (100) comprenant :
- un processeur (101) adapté à mettre en oeuvre au moins un premier système d'exploitation de haut niveau (301) et au moins une première application (302A, 302B) ;
- un élément sécurisé (102) adapté à mettre en oeuvre un premier système d'exploitation de bas niveau (355) configuré pour mettre en oeuvre la vérification de la fiabilité ou l'authenticité du premier système d'exploitation (301), et un deuxième système d'exploitation de bas niveau (354) configuré pour mettre en oeuvre au moins une deuxième application (352A, 352B) et pour mettre en oeuvre au moins une communication sans fil ou pour communiquer avec ladite au moins une première application (302A, 302B),
dans lequel à chaque démarrage du dispositif électronique (100), le premier système d'exploitation de bas niveau (355) effectue une vérification de la fiabilité ou de l'authenticité du premier système d'exploitation de haut niveau (301), et
quand ladite au moins une première application (302A, 302B) envoie une requête à ladite au moins une deuxième application (AppSE1), ledit deuxième système d'exploitation de bas niveau (354) demande ledit résultat au premier système d'exploitation de bas niveau (355) et le rend accessible de la deuxième application (352A, 352B).

2. Procédé de protection d'un dispositif électronique comprenant :
- un processeur (101) adapté à mettre en oeuvre au moins un premier système d'exploitation de haut niveau (301) et au moins une première application (302A, 302B) ;
- un élément sécurisé (102) adapté à mettre en oeuvre un premier système d'exploitation de bas niveau (355) configuré pour mettre en oeuvre la vérification de la fiabilité ou l'authenticité du premier système d'exploitation (301), et un deuxième système d'exploitation de bas niveau (354) configuré pour mettre en oeuvre au moins une deuxième application (352A, 352B) et pour mettre en oeuvre au moins une communication sans fil ou pour communiquer avec ladite au moins une première application (302A, 302B),
dans lequel à chaque démarrage du dispositif électronique (100), le premier système d'exploitation de bas niveau (355) effectue une vérification de la fiabilité ou d'authenticité du premier système d'exploitation de haut niveau (301), et
quand ladite au moins une première application (302A, 302B) envoie une requête à ladite au moins une deuxième application (AppSE1), ledit deuxième système d'exploitation de bas niveau (354) demande ledit résultat au premier système d'exploitation de bas niveau (355) et le rend accessible de la deuxième application (352A, 352B).

3. Dispositif selon la revendication 1, ou procédé selon la revendication 2, dans lequel lorsque ledit résultat indique que le premier système d'exploitation de haut niveau (301) est fiable ou authentique alors ladite au moins une deuxième application accepte la requête de ladite au moins une première application.

4. Dispositif selon la revendication 1 ou 3, ou procédé selon la revendication 2 ou 3, dans lequel lorsque ledit résultat indique que le premier système d'exploitation n'est pas fiable ou authentique alors ladite au moins une deuxième application (352A, 352B) peut refuser, accepter partiellement ou accepter entièrement la requête de ladite au moins une première application (302A, 302B).

5. Dispositif ou procédé selon la revendication 2 ou 3, dans lequel lorsque ladite au moins une deuxième application (352A, 352B) refuse, accepte partiellement ou accepte entièrement la requête de ladite au moins une première application, ladite au moins une deuxième application prend en compte une liste de règles d'autorisations d'accès de ladite au moins une première application.

6. Dispositif selon l'une quelconque des revendications 1, 3 à 5, ou procédé selon l'une quelconque des revendications 2 à 5, dans lequel quand le premier système d'exploitation de bas niveau (355) effectue la vérification de la fiabilité du premier système d'exploitation, le premier système d'exploitation de bas niveau (355) stocke ledit résultat.

7. Dispositif selon l'une quelconque des revendications 1, 3 à 6, ou procédé selon l'une quelconque des revendications 2 à 6, dans lequel quand le deuxième système d'exploitation de bas niveau (354) rend accessible à la deuxième application (352A, 352B) ledit résultat, le deuxième système d'exploitation de bas niveau (354) envoie ledit résultat à ladite au moins une deuxième application (352A, 352B) .

8. Dispositif selon l'une quelconque des revendications 1, 3 à 6, ou procédé selon l'une quelconque des revendications 2 à 6, dans lequel quand le deuxième système d'exploitation de bas niveau (TPM) rend accessible à la deuxième application (352A, 352B) ledit résultat, le deuxième système d'exploitation de bas niveau (355) met à la disposition, de ladite au moins une deuxième application (352A, 352B), ledit résultat par l'intermédiaire d'une première interface de programmation d'application.

9. Dispositif selon l'une quelconque des revendications 1, 3 à 8, ou procédé selon l'une quelconque des revendications 2 à 8, dans lequel le premier système d'exploitation de haut niveau (355) est le programme connu sous la dénomination Trust Platform Module (TPM).

10. Dispositif selon l'une quelconque des revendications 1, 3 à 9, ou procédé selon l'une quelconque des revendications 2 à 9, dans lequel le deuxième système d'exploitation de bas niveau (354) est le programme connu sous la dénomination Global Platform (GP) et/ou le programme connu sous la dénomination Java Card Virtual Machine (JCVM).

11. Dispositif selon l'une quelconque des revendications 1, 3 à 10, ou procédé selon l'une quelconque des revendications 2 à 10, dans lequel lesdits premier et deuxième systèmes d'exploitation de bas niveau (354, 355) sont adaptés à communiquer par l'intermédiaire d'un canal de communication dédié.

12. Dispositif selon l'une quelconque des revendications 1, 3 à 11, ou procédé selon l'une quelconque des revendications 2 à 11, dans lequel l'élément sécurisé (102) comprend une première puce électronique mettant en oeuvre ledit premier système d'exploitation de bas niveau (355), et une deuxième puce électronique, différente de la première puce, mettant en oeuvre ledit deuxième système d'exploitation de bas niveau (354).

13. Dispositif ou procédé selon la revendication 12, dans lequel la première puce est considérée comme un premier élément sécurisé, et la deuxième puce est considérée comme un deuxième élément sécurisé.

14. Dispositif selon l'une quelconque des revendications 1, 3 à 13, ou procédé selon l'une quelconque des revendications 2 à 13, dans lequel l'élément sécurisé (102) est adapté à mettre en oeuvre au moins une deuxième interface de programmation d'application (501) configurée pour vérifier si une commande reçue par ladite au moins une deuxième application (352A, 352B) a été envoyée de manière fiable.

15. Dispositif ou procédé selon la revendication 14, dans lequel ladite deuxième interface de programmation d'application (501) est configurée pour utiliser plusieurs moyens de vérification.

16. Dispositif ou procédé selon la revendication 14 ou 15, dans lequel ladite deuxième interface de programmation d'application (501) est configurée pour vérifier si l'expéditeur de ladite commande est fiable.
